# EUROPEAN PATENT APPLICATION

(11) **EP 4 191 749 A1**
(43) Date of publication of application: **07.06.2023**
(21) Application number: 21863362.6
(22) Date of filing: 01.07.2021
(51) Int. Cl.: H01M 10/613, H01M 10/6568

(54) **BATTERY PACK AND AUTOMOBILE HAVING SAME**

(30) Priority: 04.09.2020 CN 202010921347; 04.09.2020 CN 202021921823 U
(71) Applicant: Sunwoda Electric Vehicle Battery Co., Ltd., Shenzhen, Guangdong 518000 (CN)
(72) Inventor: CHEN, Binbin, Shenzhen, Guangdong 518000 (CN); WEN, Shibiao, Shenzhen, Guangdong 518000 (CN); XI, Bingrong, Shenzhen, Guangdong 518000 (CN); WANG, Huawen, Shenzhen, Guangdong 518000 (CN); WANG, Mingwang, Shenzhen, Guangdong 518000 (CN)
(74) Representative: Range, Christopher William
(86) International application number: PCT/CN2021/104013
(87) International publication number: WO 2022/048294

(57) **Abstract**

A battery pack and an automobile having the same are disclosed. The battery pack includes an upper cooling pipe, a casing, a water inlet pipe, a water outlet pipe and a plurality of cells, a first connecting column and a second connecting column are arranged in the casing, a cooling pipeline is formed in a base of the casing, one end of the upper cooling pipe is connected to a top portion of the first connecting column, and is communicated with the cooling pipeline through a pipeline in the first connecting column, and the other end of the upper cooling pipe is connected to a top portion of the second connecting column, and is hermetically connected with an opening of a groove formed on the top portion of the second connecting column; a water inlet pipe and a water outlet pipe are both arranged on an outer wall of the casing, the water inlet pipe is communicated with the cooling pipeline, and the water outlet pipe is communicated with the upper cooling pipe through the groove; and the plurality of cells are arranged in the casing, and are located between the upper cooling pipe and the cooling pipeline. According to the battery pack of the invention, the upper cooling pipe can be quickly and conveniently mounted and detached, which facilitates treatment of the cells between the upper cooling pipe and the cooling pipeline.

## Description

### TECHNICAL FIELD

The present invention relates to the technical field of battery thermal management, and particularly to a battery pack and an automobile having the same.

### BACKGROUND

At present, the driving apparatus of an automobile is typically a power battery pack, and the power battery pack includes a plurality of cells. In a process that the power battery pack drives the automobile to work, the cells will generate a lot of heat in an operating state. If a heat dissipation measure is not taken in time, the cells will be damaged, and the damage of any cell may lead to the damage of the whole power battery pack, thus affecting normal operation of the automobile. Therefore, a cooling assembly should be arranged in the power battery pack to absorb the heat generated by the cells during operating, thus playing a role of heat dissipation. At present, methods for mounting the cooling assembly are complicated. If the battery pack needs to be maintained or the cells in the battery pack need to be replaced, it is necessary to detach multiple parts in the cooling assembly before operation. Meanwhile, when the cooling assembly is damaged, it is very inconvenient to replace the cooling assembly.

### SUMMARY

The present invention aims to solve at least one of the technical problems in the existing technology. Therefore, the present invention provides a battery pack, in which an upper cooling pipe can be quickly and conveniently detached or mounted.

The present invention further provides an automobile.

In a first aspect, an embodiment of the present invention provides a battery pack, which includes: an upper cooling pipe;
a casing, wherein a first connecting column and a second connecting column are arranged in the casing, a cooling pipeline is formed in a base of the casing, a pipeline is arranged in the first connecting column, the pipeline is arranged in a vertical direction, one end of the upper cooling pipe is connected to a top portion of the first connecting column, and is communicated with one end of the cooling pipeline through the pipeline, a groove arranged in a vertical direction is formed on a top portion of the second connecting column, and the other end of the upper cooling pipe is connected to the top portion of the second connecting column, and is hermetically connected with an opening of the groove;
a water inlet pipe, wherein an end portion of the water inlet pipe is arranged on an outer wall of the casing, and the water inlet pipe is communicated with the cooling pipeline;
a water outlet pipe, wherein an end portion of the water outlet pipe is arranged on the outer wall of the casing, and the water outlet pipe is communicated with the upper cooling pipe through the groove; and
a plurality of cells, wherein the plurality of cells are arranged in the casing, and are located between the upper cooling pipe and the cooling pipeline.

The battery pack according to the embodiment of the present invention has at least the following beneficial effects. The battery pack is used in the present invention, compared with the existing technology, the pipeline arranged in the vertical direction may be arranged in the first connecting column of the casing, so that two ends of the upper cooling pipe are respectively mounted on the top portions of the first connecting column and the second connecting column, and one end of the upper cooling pipe is communicated with one end of the cooling pipeline through the pipeline. The groove arranged in the vertical direction is formed on the top portion of the second connecting column, the other end of the upper cooling pipe is hermetically connected with the opening of the groove, the upper cooling pipe is communicated with the water outlet pipe through the groove, the cooling pipeline is communicated with the water inlet pipe, and the plurality of cells are arranged in the casing, and are located between the upper cooling pipe and the cooling pipeline. According to the battery pack of the present invention, a cooling system loop is defined by the water inlet pipe, the cooling pipeline, the first connecting column, the upper cooling pipe, the second connecting column and the water outlet pipe, and a cooling liquid flows in the cooling loop, thus performing heat dissipation on the cells arranged between the cooling pipeline and the upper cooling pipe. Since the pipeline and the groove are both arranged in a vertical direction, and two ends of the upper cooling pipe are respectively mounted on the top portions of the first connecting column and the second connecting column, when the upper cooling pipe is detached or mounted, the operation can be directly performed in a vertical direction, so that the upper cooling pipe can be detached and mounted quickly and conveniently. Meanwhile, the cells can be operated only by detaching the upper cooling pipe, thus being convenient and quick in process.

According to the battery pack in other embodiments of the present invention, a plurality of radiating ribs are arranged in the cooling pipeline, and the radiating ribs are arranged at intervals in the cooling pipeline.

According to the battery pack in other embodiments of the present invention, a connecting channel is arranged in the second connecting column, the connecting channel is located below the groove, and the cooling pipeline is communicated with the water inlet pipe through the connecting channel.

According to the battery pack in other embodiments of the present invention, the upper cooling pipe and the cooling pipeline are both set to be a U-shaped pipe.

According to the battery pack in other embodiments of the present invention, the water outlet pipe is located right above the water inlet pipe.

According to the battery pack in other embodiments of the present invention, two ends of the upper cooling pipe are further respectively provided with a first mounting block and a second mounting block, a bottom portion of the first mounting block is provided with a first inserting portion, a bottom portion of the second mounting block is provided with a second inserting portion, the first mounting block is inserted into the pipeline through the first inserting portion, and the second mounting block is inserted into the groove through the second inserting portion.

According to the battery pack in other embodiments of the present invention, a first through hole is arranged in the first mounting block, a second through hole is arranged in the second mounting block, the first through hole and the second through hole are both in an L-shape, a horizontal portion of the first through hole is communicated with one end of the upper cooling pipe, a vertical portion of the first through hole extends across the first inserting portion, a horizontal portion of the second through hole is communicated with the other end of the upper cooling pipe, and a vertical portion of the second through hole extends across the second inserting portion.

According to the battery pack in other embodiments of the present invention, sealing rings are respectively arranged at a matching position between the first inserting portion and the pipeline and a matching position between the second inserting portion and the groove.

According to the battery pack in other embodiments of the present invention, one end of the upper cooling pipe is bent upwardly to be in an S-shape, and is connected with the second mounting block.

In a second aspect, an embodiment of the present invention provides an automobile, which includes the battery pack according to the embodiment in the first aspect above.

The automobile according to the embodiment of the present invention has at least the following beneficial effects. The automobile is driven to run by the battery pack above. The cooling system loop is defined by the water inlet pipe, the cooling pipeline, the first connecting column, the upper cooling pipe, the second connecting column and the water outlet pipe in the battery pack, and the cooling pipeline, the first connecting column and the second connecting column are all arranged on the casing, the end portions of the water inlet pipe and the water outlet pipe are also arranged on an outer side the casing. The cells are arranged in the casing, and are located between the upper cooling pipe and the cooling pipeline. In this way, if the cells need to be operated, the upper cooling pipe may be directly detached for the operation, and the upper cooling pipe may be directly detached and mounted in a vertical direction, thus being convenient and quick to operate, and facilitating maintenance of the battery pack, so that the automobile employing the battery pack has a longer endurance mileage and a service life of the automobile is prolonged.

### BRIEF DESCRIPTION OF THE DRAWINGS

FIG. 1 is an exploded view of a cooling assembly and a casing of a battery pack in First Embodiment of the present invention;
FIG. 2 is a sectional view of the cooling assembly and the casing of the battery pack in First Embodiment of the present invention;
FIG. 3 is a partial enlarged view of a part A in FIG. 2; and
FIG. 4 is a schematic structural diagram of the casing of the battery pack in First Embodiment of the present invention.

Reference numerals:
110 refers to upper cooling pipe, 111 refers to first mounting block, 112 refers to second mounting block, 113 refers to first inserting portion, 114 refers to second inserting portion, 120 refers to casing, 121 refers to base, 122 refers to radiating rib, 123 refers to first connecting column, 124 refers to pipeline, 125 refers to second connecting column, 126 refers to groove, 127 refers to connecting channel, 128 refers to second through hole, 130 refers to water inlet pipe, 140 refers to water outlet pipe, and 150 refers to sealing ring.

### DETAILED DESCRIPTION

The concept and the generated technical effect of the present invention are clearly and completely described hereinafter with reference to the embodiments to fully understand the objectives, the features and the effects of the present invention. Obviously, the described embodiments are only some but not all of the embodiments of the present invention, and based on the embodiments of the present invention, other embodiments obtained by those of ordinary skills in the art without going through any creative work all belong to the scope of protection of the present invention.

In the description of the embodiments of the present invention, the orientation or position relationship indicated by the terms "up", "down", "front", "rear", "left", "right", and the like is based on the orientation or position relationship shown in the accompanying drawings, it is only for the convenience of description of the present invention and simplification of the description, and it is not to indicate or imply that the indicated device or element must have a specific orientation, and be constructed and operated in a specific orientation. Therefore, the terms should not be understood as limiting the present invention.

In the description of the embodiments of the present invention, if some feature is described as being "set", "fixed", "connected" or "mounted" on another feature, the feature may be directly set, fixed or connected to another feature, or indirectly set, fixed, connected or mounted on another feature. In the description of the embodiments of the present invention, the meaning of "several" refers to being one or more, and the meaning of "multiple/a plurality of" refers to being two or more. The meanings of "greater than", "less than" and "more than" should all be understood as not including this number, while the meanings of "above", "below" and "within" should all be understood as including this number. The terms "first" and "second" should be understood as being used for distinguishing between the technical features only in the description, and cannot be understood as indicating or implying relative importance, implicitly indicating the number of technical features indicated thereby, or implicitly indicating the order of technical features indicated thereby.

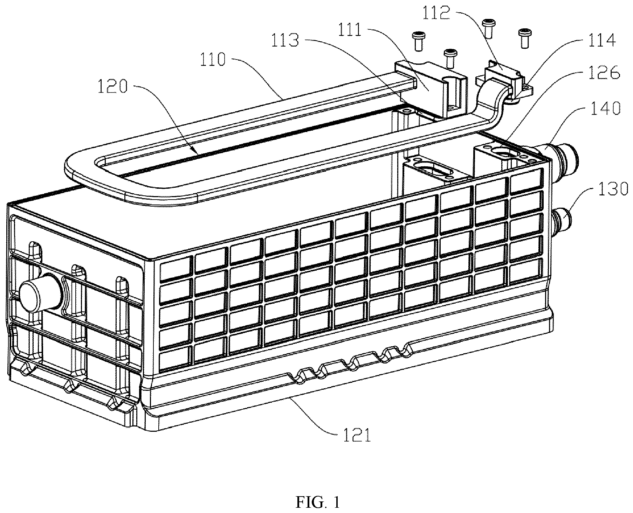

A battery pack according to an embodiment in a first aspect of the present invention is described hereinafter with reference to FIG. 1 to FIG. 4.

As shown in FIG. 1 to FIG. 4, the battery pack according to the embodiment in the first aspect of the present invention includes an upper cooling pipe 110, a casing 120, a water inlet pipe 130, a water outlet pipe 140 and a plurality of cells.

A first connecting column 123 and a second connecting column 125 are arranged in the casing 120, a cooling pipeline is formed in a base 121 of the casing 120, a pipeline 124 is arranged in the first connecting column 123, the pipeline 124 is arranged in a vertical direction, one end of the upper cooling pipe 110 is connected to a top portion of the first connecting column 123, and is communicated with one end of the cooling pipeline through the pipeline 124, a groove 126 arranged in a vertical direction is formed on a top portion of the second connecting column 125, and the other end of the upper cooling pipe 110 is connected to the top portion of the second connecting column 125, and is hermetically connected with an opening of the groove 126. An end portion of the water inlet pipe 130 is arranged on an outer wall of the casing 120, and the water inlet pipe 130 is communicated with the cooling pipeline. An end portion of the water outlet pipe 140 is arranged on the outer wall of the casing 120, and the water outlet pipe 140 is communicated with the upper cooling pipe 110 through the groove 126. The plurality of cells are arranged in the casing 120, and are located between the upper cooling pipe 110 and the cooling pipeline.

Specifically, a cooling system loop is defined by the water inlet pipe 130, the cooling pipeline, the first connecting column 123, the upper cooling pipe 110, the second connecting column 125 and the water outlet pipe 140. The water inlet pipe 130 is communicated with the cooling pipeline, the upper cooling pipe 110 is communicated with the water outlet pipe 140 through the groove 126 on the second connecting column 125. Cooling liquid finishes heat adsorption to the cells through the cooling system, thus playing a role of heat dissipation. A channel between the groove 126 in the second connecting column 125 and the water outlet pipe 140 is in an L-shape, which means that the opening of the groove 126 is arranged in a vertical direction, so that the upper cooling pipe 110 may be directly mounted on the second connecting column 125 in a vertical direction, and the upper cooling pipe 110 is communicated with the groove 126, and the cooling liquid flows to the groove 126 from the upper cooling pipe 110, and flows out of the water outlet pipe 140. Since the first connecting column 123 and the second connecting column 125 are arranged on an inner wall of the casing 120, and the cooling pipeline is arranged in the base 121 of the casing 120, if the cells located between the upper cooling pipe 110 and the cooling pipeline need to be treated, it is only necessary to detach the upper cooling pipe 110 from the first connecting column 123 and the second connecting column 125 to treat the cells. The pipeline 124 in the first connecting column 123 is arranged in the vertical direction, and the groove 126 on the second connecting column 125 is arranged in the vertical direction, so that the upper cooling pipe may be directly mounted on the first connecting column 123 and the second connecting column 125 respectively in the vertical direction, thus facilitating detachment and mounting of the upper cooling pipe 110, without detaching additional apparatuses.

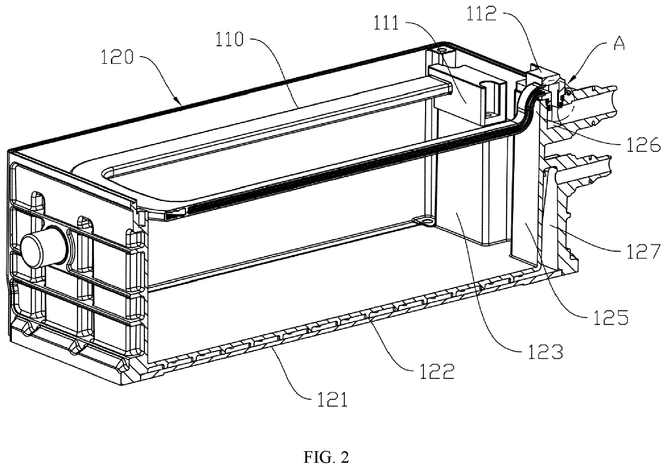

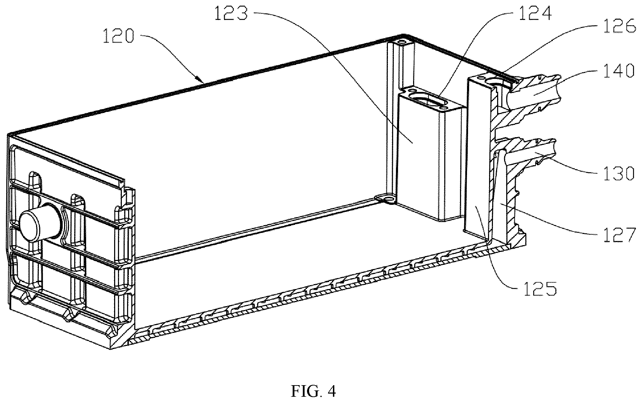

In some embodiments of the present invention, a plurality of radiating ribs 122 are arranged in the cooling pipeline, and the radiating ribs 122 are arranged at intervals in the cooling pipeline. For example, as shown in FIG. 2 and FIG. 4, the plurality of radiating ribs 122 are arranged at intervals in the cooling pipeline. Specifically, by arranging the plurality of radiating ribs 122 at intervals in the cooling pipeline, a flowing direction of the cooling liquid is bent, so that a flowing time of the cooling liquid in the cooling pipeline is prolonged, and more heat is absorbed, thus improving the heat dissipation efficiency of the cooling pipeline.

In some embodiments of the present invention, a connecting channel 127 is arranged in the second connecting column 125, the connecting channel 127 is located below the groove 126, and the cooling pipeline is communicated with the water inlet pipe 130 through the connecting channel 127. For example, as shown in FIG. 2 and FIG. 4, the connecting channel 127 is arranged in the second connecting column 125, the connecting channel 127 is located below the groove 126, and the cooling pipeline is communicated with the water inlet pipe 130 through the connecting channel 127. Specifically, by arranging the connecting channel 127 below the groove 126, and also arranging the connecting channel 127 in the second connecting column 125, the groove 126 and the connecting channel 127 are not communicated with each other, and the water inlet pipe 130 is arranged at a position corresponding to the second connecting column 125, so that the cooling pipeline may be communicated with the water inlet pipe 130 through the connecting channel 127, thus making the cooling liquid enter the cooling pipeline more quickly under an action of gravity and absorbing heat emitted by the cells on the cooling pipeline.

In some embodiments of the present invention, the upper cooling pipe 110 and the cooling pipeline are both set to be in a U-shape. For example, as shown in FIG. 1 and FIG. 2, the upper cooling pipe 110 and the cooling pipeline are both set to be in the U-shape. Specifically, by setting the upper cooling pipe 110 and the cooling pipeline to be in the U-shape, the upper cooling pipe 110 and the cooling pipeline may be better covered on the cells. Meanwhile, a good cooling and heat dissipation loop may be defined by the cooling pipe, the connecting columns, the water inlet pipe 130 and the water outlet pipe 140. In addition, by setting the upper cooling pipe 110 and the cooling pipeline to be in the U-shape, a pipe section length of the upper cooling pipe 110 and a length of the cooling pipeline can also be increased. Meanwhile, contact areas of the upper cooling pipe 110 and the cooling pipeline with the cells are increased, and a flowing time of the cooling liquid in the upper cooling pipe 110 and the cooling pipeline is prolonged, thus prolonging a heat adsorption time of the cooling liquid, and improving heat dissipation effects of the upper cooling pipe and the cooling pipeline. It is conceivable that the upper cooling pipe and the cooling pipeline may also be set to be in an S-shape, so as to increase the pipe section length of the upper cooling pipe 110 and the length of the cooling pipeline, thus improving the heat dissipation effects of the upper cooling pipe 110 and the cooling pipeline. In the embodiment, setting the upper cooling pipe 110 and the cooling pipeline to be in the U-shape is not a specific limitation to the present invention.

In some embodiments of the present invention, the water outlet pipe 140 is located right above the water inlet pipe 130. For example, as shown in FIG. 1 and FIG. 2, the water outlet pipe 140 is located right above the water inlet pipe 130. Specifically, by arranging the water outlet pipe 140 right above the water inlet pipe 130, the upper cooling pipe 110 is also located above the cooling pipeline, and the cooling liquid enters from the water inlet pipe 130, passes through the cooling pipeline, the first connecting column 123 and the upper cooling pipe 110 in sequence, and then flows out of the water outlet pipe 140, so as to form the heat dissipation loop. Meanwhile, since the upper cooling pipe 110 is integrally formed with a bottom portion of the casing 120, which means that the upper cooling pipe is located on an innermost side of the casing 120. When the cells are mounted in the casing 120, heat close to the cooling pipeline is more difficult to be dissipated than heat at the upper cooling pipe 110, and the cooling liquid entering from the cooling pipeline can improve the heat dissipation effect at the cooling pipeline, thus ensuring the use efficiency of the battery pack.

In some embodiments of the present invention, two ends of the upper cooling pipe 110 are further respectively provided with a first mounting block 111 and a second mounting block 112, a bottom portion of the first mounting block 111 is provided with a first inserting portion 113, a bottom portion of the second mounting block 112 is provided with a second inserting portion 114, the first mounting block 111 is inserted into the pipeline 124 through the first inserting portion 113, and the second mounting block 112 is inserted into the groove 126 through the second inserting portion. For example, as shown in FIG. 1 and FIG. 2, the bottom portion of the first mounting block 111 is provided with the first inserting portion 113, the bottom portion of the second mounting block 112 is provided with the second inserting portion 114, the first mounting block 111 is inserted into the pipeline 124 through the first inserting portion 113, and the second mounting block 112 is inserted into the groove 126 through the second inserting portion. Specifically, since it is difficult to mount the upper cooling pipe 110 on the first connecting column 123 and the second connecting column 125, two ends of the upper cooling pipe 110 are respectively provided with the first mounting block 111 and the second mounting block 112, so that one end of the upper cooling pipe 110 may be mounted on the first connecting column 123 through the first mounting block 111, and the other end of the upper cooling pipe may be mounted on the second connecting column 125 through the second mounting block 112. The bottom portion of the first mounting block 111 is provided with the first inserting portion 113, so that the first mounting block 111 may be inserted into the pipeline 124 through the first inserting portion 113, thus facilitating mounting of one end of the upper cooling pipe 110 on the first connecting column 123. The bottom portion of the second mounting block 112 is provided with the second inserting portion 114, so that the second mounting block 112 may be inserted into the groove 126 through the second inserting portion 114, thus facilitating mounting of the other end of the upper cooling pipe 110 on the second connecting column 125.

In some embodiments of the present invention, a first through hole is arranged in the first mounting block 111, a second through hole 128 is arranged in the second mounting block 112, the first through hole and the second through hole 128 are both in an L-shape, a horizontal portion of the first through hole is communicated with one end of the upper cooling pipe 110, a vertical portion of the first through hole extends across the first inserting portion 113, a horizontal portion of the second through hole 128 is communicated with the other end of the upper cooling pipe 110, and a vertical portion of the second through hole 128 extends across the second inserting portion 114. For example, as shown in FIG. 1, the second through hole 128 is set to be in the L-shape, the horizontal portion of the second through hole 128 is communicated with the other end of the upper cooling pipe 110, and the vertical portion of the second through hole 128 extends across the second inserting portion 114. Specifically, by setting the first through hole and the second through hole 128 to be in the L-shape, communicating the horizontal portion of the first through hole with one end of the upper cooling pipe 110, and making the vertical portion of the first through hole extend across the first inserting portion 113, the cooling liquid in the cooling pipeline can pass through the first inserting portion 113 and the first through hole in sequence and then flow into the upper cooling pipe 110. Moreover, by communicating the horizontal portion of the second through hole 128 with the other end of the upper cooling pipe 110, and making the vertical portion of the second through hole 128 extend across the second inserting portion, the cooling liquid in the upper cooling pipe 110 can pass through the second through hole 128 and the second inserting portion 114 in sequence and then flow into the water outlet pipe 140, and then flow out of the water outlet pipe 140. Meanwhile, a plurality of connecting holes are formed in the first mounting block 111 and the second mounting block 112, a plurality of threaded holes are formed in upper surfaces of the first connecting column 123 and the second connecting column 125, and the connecting holes are in one-to-one correspondence with the threaded holes. The first mounting block 111 is mounted on the first connecting column 123 by bolt connection, and the second mounting block 112 is mounted on the second connecting column 125 by bolt connection. An opening of the threaded hole is arranged in a vertical direction, which facilitates direct detachment or mounting of the upper cooling pipe 110 in the vertical direction.

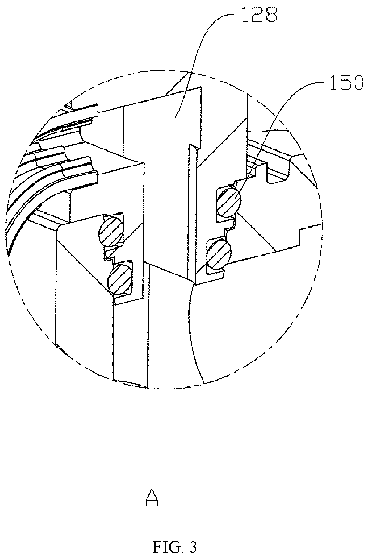

In some embodiments of the present invention, the battery pack further includes a plurality of sealing rings 150, wherein the sealing rings 150 are respectively arranged at a matching position between the first inserting portion 113 and the pipeline 124 and a matching position between the second inserting portion 114 and the groove 126. For example, as shown in FIG. 2 and FIG. 3, four sealing rings 150 are arranged at the matching position between the second inserting portion 114 and the groove 126. Specifically, by arranging four sealing rings 150 at the matching position between the first inserting portion 113 and the pipeline 124 and the matching position between the second inserting portion 114 and the groove 126 respectively, the first inserting portion 113 can be matched with the pipeline 124 more stably, so that the first mounting block 111 at one end of the upper cooling pipe 110 may be mounted on the first connecting column 123 more stably. Moreover, the second inserting portion 114 may be matched with the groove 126 more stably, so that the second mounting block 112 at the other end of the upper cooling pipe 110 may be mounted on the second connecting column 125 more stably, thus ensuring the sealing effect of the cooling loop.

In some embodiments of the present invention, one end of the upper cooling pipe 110 is bent upwardly to be in an S-shape, and is connected with the second mounting block 112. For example, as shown in FIG. 1 and FIG. 2, one end of the upper cooling pipe 110 is bent upwardly to be in the S-shape, and is connected with the second mounting block 112. Specifically, since the upper cooling pipe 110 needs to contact with the plurality of cells after mounting, there is a requirement on a mounting position of the upper cooling pipe 110. In the embodiment, the top portions of the water outlet pipe 140 and the second connecting column 125 are both located above the upper cooling pipe 110, so that the upper cooling pipe 110 needs to be bent upwardly to be in the S-shape so as to be connected with the second mounting block 112, and is mounted above the second connecting column 125 through the second mounting block 112.

It can be understood that, according to actual needs, in other embodiments, if the water outlet pipe 140 and the top portion of the second connecting column 125 correspond to the position of the upper cooling pipe 110, the upper cooling pipe 110 may also be directly connected with the second mounting block 112, and mounted above the second connecting column 125 through the second mounting block 112. Therefore, bending one end of the upper cooling pipe 110 upwardly to be in the S-shape is not a specific limitation to the present invention.

An automobile according to an embodiment in a second aspect of the present invention includes the battery pack according to the embodiment in the first aspect of the present invention.

The automobile according to the embodiment in the second aspect of the present invention is driven to run by the battery pack above. The cooling system loop is defined by the water inlet pipe 130, the cooling pipeline, the first connecting column 123, the upper cooling pipe 110, the second connecting column 125 and the water outlet pipe 140 in the battery pack, and the cooling pipeline, the first connecting column 123 and the second connecting column 125 are all arranged on the casing 120, the end portions of the water inlet pipe 130 and the water outlet pipe 140 are arranged on an outer side of the casing 120. The cells are arranged in the casing 120, and are located between the upper cooling pipe 110 and the cooling pipeline. In this way, if the cells need to be operated, the upper cooling pipe 110 may be directly detached for the operation, and the upper cooling pipe 110 may be directly detached and mounted in a vertical direction, thus being convenient and quick to operate, and facilitating maintenance of the battery pack, so that the automobile employing the battery pack has a longer endurance mileage and a service life of the automobile is prolonged.

The embodiments of the present invention are described in detail with reference to the drawings above, but the present invention is not limited to the above embodiments, and various changes may also be made within the knowledge scope of those of ordinary skills in the art without departing from the purpose of the present invention. In addition, the embodiments of the present invention and the features in the embodiments may be combined with each other without conflict.

## Claims

1. A battery pack, comprising:
an upper cooling pipe;
a casing, wherein a first connecting column and a second connecting column are arranged in the casing, a cooling pipeline is formed in a base of the casing, a pipeline is arranged in the first connecting column, the pipeline is arranged in a vertical direction, one end of the upper cooling pipe is connected to a top portion of the first connecting column, and is communicated with one end of the cooling pipeline through the pipeline, a groove arranged in a vertical direction is formed on a top portion of the second connecting column, and the other end of the upper cooling pipe is connected to the top portion of the second connecting column, and is hermetically connected with an opening of the groove;
a water inlet pipe, wherein the water inlet pipe is arranged on an outer wall of the casing, and the water inlet pipe is communicated with the cooling pipeline;
a water outlet pipe, wherein the water outlet pipe is arranged on the outer wall of the casing, and the water outlet pipe is communicated with the upper cooling pipe through the groove; and
a plurality of cells, wherein the plurality of cells are arranged in the casing, and are located between the upper cooling pipe and the cooling pipeline.

2. The battery pack according to claim 1, wherein a plurality of radiating ribs are arranged in the cooling pipeline, and the radiating ribs are arranged at intervals in the cooling pipeline.

3. The battery pack according to claim 1, wherein a connecting channel is arranged in the second connecting column, the connecting channel is located below the groove, and the cooling pipeline is communicated with the water inlet pipe through the connecting channel.

4. The battery pack according to claim 1, wherein the upper cooling pipe and the cooling pipeline are both set to be in a U-shape.

5. The battery pack according to claim 1, wherein the water outlet pipe is located right above the water inlet pipe.

6. The battery pack according to claim 1, wherein two ends of the upper cooling pipe are further respectively provided with a first mounting block and a second mounting block, a bottom portion of the first mounting block is provided with a first inserting portion, a bottom portion of the second mounting block is provided with a second inserting portion, the first mounting block is inserted into the pipeline through the first inserting portion, and the second mounting block is inserted into the groove through the second inserting portion.

7. The battery pack according to claim 6, wherein a first through hole is arranged in the first mounting block, a second through hole is arranged in the second mounting block, the first through hole and the second through hole are both in an L-shape, a horizontal portion of the first through hole is communicated with one end of the upper cooling pipe, a vertical portion of the first through hole extends across the first inserting portion, a horizontal portion of the second through hole is communicated with the other end of the upper cooling pipe, and a vertical portion of the second through hole extends across the second inserting portion.

8. The battery pack according to claim 6, further comprising a plurality of sealing rings, wherein the sealing rings are respectively arranged at a matching position between the first inserting portion and the pipeline and a matching position between the second inserting portion and the groove.

9. The battery pack according to claim 6, wherein one end of the upper cooling pipe is bent upwardly to be in an S-shape, and is connected with the second mounting block.

10. An automobile, comprising the battery pack according to any one of claims 1 to 9.
